Europäisches Patentamt

European Patent Office

Office européen des brevets

(11) Veröffentlichungsnummer : **0 128 405**
**B1**

(12) **EUROPÄISCHE PATENTSCHRIFT**

(45) Veröffentlichungstag der Patentschrift :
01.10.86

(51) Int. Cl.⁴ : **F 24 D 19/10, G 05 D 23/19**

(21) Anmeldenummer : **84105782.1**

(22) Anmeldetag : **21.05.84**

(54) **Betriebsverfahren für eine bivalente Heizungsanlage.**

(30) Priorität : 03.06.83 DE 3320231

(43) Veröffentlichungstag der Anmeldung :
19.12.84 Patentblatt 84/51

(45) Bekanntmachung des Hinweises auf die Patenterteilung : 01.10.86 Patentblatt 86/40

(84) Benannte Vertragsstaaten :
AT BE CH DE FR GB IT LI

(56) Entgegenhaltungen :
EP-A- 0 045 266
EP-A- 0 056 445
FR-A- 2 501 837

(73) Patentinhaber : Siemens Aktiengesellschaft Berlin
und München
Wittelsbacherplatz 2
D-8000 München 2 (DE)

(72) Erfinder : Baumgärtner, Manfred, Dr.
Jakob-Henle-Strasse 26
D-8510 Fürth (DE)
Erfinder : Gärtner, Franz-Georg, Dr. Dipl.-Phys.
Johann-Krieger-Strasse 27
D-8500 Nürnberg (DE)
Erfinder : Meserth, Rudolf, Dipl.-Ing.
Friedrich-Ebert-Strasse 3d
D-8650 Kulmbach (DE)

EP 0 128 405 B1

## Beschreibung

Die Erfindung betrifft ein Betriebsverfahren für eine bivalente Heizungsanlage mit einer Wärmepumpe, die bevorzugt zur Deckung des Heizenergiebedarfes herangezogen werden soll und einem Heizkessel, der eingeschaltet wird, wenn die aktuelle Außentemperatur eine Bivalenztemperatur unterschreitet.

Bei bivalenten Heizungsanlagen ist eine sogenannte Bivalenztemperatur festgelegt, die vom Wärmebedarf des Gebäudes und von der Leistung der Wärmepumpe abhängt. Liegt die Außentemperatur unterhalb dieser Bivalenztemperatur, so muß zur Deckung des erhöhten Heizenergiebedarfs der Heizkessel eingeschaltet werden. Im Handel erhältliche Anlagen weisen daher einen Grenzwertgeber auf, der die Außentemperatur mit der Bivalenztemperatur vergleicht und den Heizkessel entsprechend ein- und ausschaltet. In der Übergangszeit kann die Außentemperatur die Bivalenztemperatur täglich über- und unterschreiten, so daß der Heizkessel täglich ein- und ausgeschaltet wird. Dabei durchfährt der Heizkessel jedoch jedesmal den Taupunkt, was eine erhöhte Korrosion und damit eine verringerte Lebensdauer des Heizkessels bewirkt. Die Häufigkeit der Ein-Ausschaltzyklen des Heizkessels kann verringert werden, wenn man für den genannten Grenzwertgeber eine Schalthysterese vorsieht. Um sicherzustellen, daß einerseits der Heizkessel bei Bedarf sicher eingeschaltet wird, andererseits aber auch nicht ständig eingeschaltet bleibt, kann man diese Schalthysterese nicht zu groß wählen. Damit wird das Problem der Korrosion des Heizkessels durch häufiges Durchfahren des Taupunkts zwar gemildert, aber keineswegs beseitigt.

Aufgabe der Erfindung ist es daher, ein Betriebsverfahren der eingangs genannten Art so auszugestalten, daß die Belastung des Heizkessels durch Ein-Ausschaltzyklen weiter verringert wird.

Diese Aufgabe wird erfindungsgemäß dadurch gelöst, daß der Heizkessel wieder ausgeschaltet wird, wenn bei einer im 24-Stunden-Rhythmus nach dem Einschaltzeitpunkt erfolgenden Überprüfung die aktuelle und die über die jeweils letzte 24-Stunden-Periode gemittelte Außentemperatur die Bivalenztemperatur übersteigen.

Dabei wird die Tatsache ausgenutzt, daß die Tag-Nacht-Temperaturschwankungen in grober Näherung etwa sinusförmig mit einer Periode von 24 Stunden verlaufen. Wenn sich die aktuelle Außentemperatur bei der Überprüfung im 24-Stunden-Rhythmus ändert, so beruht dies nicht auf Tag-Nacht-Schwankungen, sondern stellt ein Indiz für einen Temperaturwechsel dar. Um eine Störung durch kurzfristige Temperaturschwankungen zu vermeiden, wird als weiteres Kriterium für das Ausschalten des Heizkessels die über die jeweils letzte 24-Stunden-Periode gemittelte Außentemperatur herangezogen.

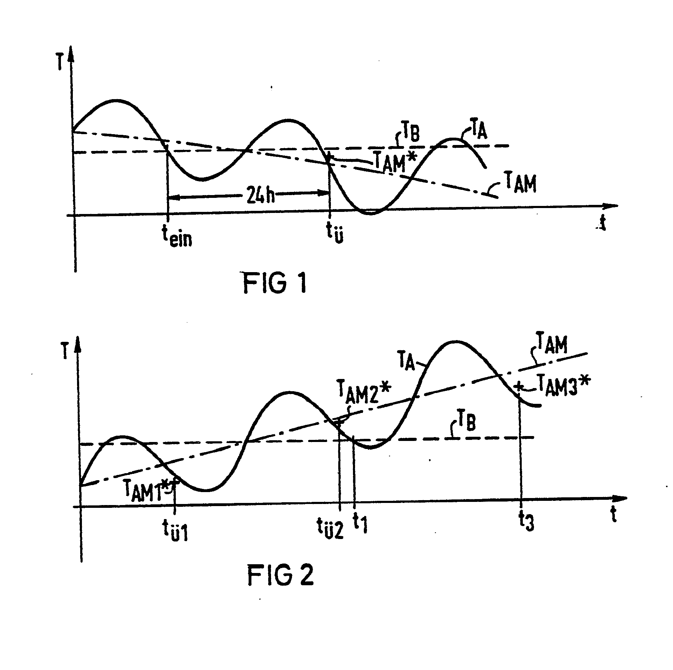

Das erfindungsgemäße Betriebsverfahren wird nachfolgend beispielhaft anhand der Figuren 1 und 2 erläutert.

Fig. 1 zeigt dabei den Verlauf einer Temperatur mit abnehmendem Mittelwert $T_{AM}$, beispielsweise in der Übergangszeit. Dies mit durchgezogener Linie gezeichnete Außentemperatur $T_A$ weist Tag-Nacht-Schwankungen mit einer Periode von 24 Stunden und einem in grober Näherung sinusförmigen Verlauf auf. Der mit strichpunktierter Linie gezeichnete gleitende Mittelwert $T_{AM}$ der Außentemperatur weist eine fallende Tendenz auf. Die eingestellte konstante Bivalenztemperatur $T_B$ ist gestrichelt eingezeichnet.

Der Heizkessel wird zu einem Zeitpunkt $t_{ein}$ eingeschaltet, wenn die aktuelle Außentemperatur $T_A$ zum ersten Mal unter die Bivalenztemperatur $T_B$ sinkt. Bei herkömmlichen Verfahren würde sie wieder ausgeschaltet werden, wenn die aktuelle Außentemperatur $T_A$ wieder über die Bivalenztemperatur $T_B$ steigt. Dies würde, wie Fig. 1 zu entnehmen ist, zu einem mehrmaligen Ein- und Ausschalten des Heizkessels mit entsprechender Korrosionsbelastung führen.

Bei dem erfindungsgemäßen Verfahren beginnt jedoch mit dem Einschaltzeitpunkt $t_{ein}$ ein Zeitglied zu laufen, das erst nach Ablauf von 24 Stunden zu einem Zeitpunkt $t_{ü}$ eine Überprüfung der Außentemperatur $T_A$ anregt. Während dieser 24 Stunden wird außerdem der Mittelwert der Außentemperatur $T_A$ gebildet. Dies kann z. B. erfolgen, indem die aktuelle Außentemperatur $T_A$ mehrmals abgefragt, die erhaltenen Temperaturwerte addiert und schließlich durch die Zahl der Abfragepunkte dividiert werden.

Zum Zeitpunkt $t_{ü}$ wird nun überprüft, ob sowohl die aktuelle Außentemperatur $T_A$ als auch die über die vergangenen 24 Stunden gemittelte Außentemperatur $T_{AM}*$ die Bivalenztemperatur $T_B$ übersteigen. Nur wenn diese Bedingung erfüllt ist, wird der Heizkessel wieder ausgeschaltet. Dies ist in der Darstellung nach Fig. 1 nicht der Fall.

Es ist zu beachten, daß der Wert $T_{AM}*$ der über 24 Stunden gemittelten Außentemperatur nicht mit dem dargestellten gleitenden Mittelwert $T_{AM}$ übereinstimmt. Der Wert $T_{AM}*$ liegt im Unterschied $T_{AM}$ jeweils nur diskontinuierlich zu den Überwachungszeitpunkten $t_{ü}$ vor. Die dargestellte Überprüfung wird nun alle 24 Stunden durchgeführt, bis schließlich die Ausschaltbedingung für den Heizkessel erfüllt ist.

Der Fall einer Außentemperatur $T_A$ mit ansteigendem Mittelwert $T_{AM}$ ist in Fig. 2 dargestellt. Es wird angenommen, daß der Heizkessel zunächst eingeschaltet ist. Die Überwachungszeitpunkte $t_{ü}$ hängen vom vorausgehenden Einschaltzeitpunkt $t_{ein}$ ab. An einem ersten angenommenen Überwachungszeitpunkt $t_{ü}$ ist die Ausschaltbedingung für den Heizkessel noch nicht erfüllt, da sowohl die aktuelle Außentemperatur $T_A$ als auch die über 24 Stunden gemittelte Außentemperatur $T_{AM1}*$ unter der Bivalenz-

temperatur $T_B$ liegen. Zu dem nach 24 Stunden folgenden Überwachungszeitpunkt $t_{Ü2}$ liegt sowohl die aktuelle Außentemperatur $T_A$ als auch die über die letzten 24 Stunden gemittelte Außentemperatur $T_{AM2}^*$ über der Bivalenztemperatur $T_B$, so daß der Heizkessel ausgeschaltet wird. In Fig. 2 ist nun der ungünstigste Fall dargestellt, daß nämlich die aktuelle Außentemperatur $T_A$ zu einem Zeitpunkt $t_1$ nochmals unter die Bivalenztemperatur $T_B$ sinkt, der Heizkessel wird daher nochmals eingeschaltet und 24 Stunden später zum Zeitpunkt $t_3$ endgültig ausgeschaltet. Das in diesem Fall kurz nach dem Ausschalten des Heizkessels erfolgende Wiedereinschalten wirkt sich jedoch nicht schädlich aus, da der Heizkessel in diesem Fall noch warm ist und nicht den Taupunkt durchfahren muß. Es ist außerdem darauf hinzuweisen, daß der in Fig. 2 dargestellte Fall des Aus- und Wiedereinschaltens einen Grenzfall darstellt, der im praktischen Betrieb nur selten auftritt.

Zusammenfassend ist also festzustellen, daß es mit dem beschriebenen Betriebsverfahren gelingt, ein durch tageszeitliche Temperaturschwankungen bedingtes Ein- und Ausschalten des Heizkessels nahezu völlig zu verhindern. Ein gelegentlich kurz nach dem Ausschalten wieder erforderliches Einschalten des Heizkessels führt nicht zu Korrosionsbeanspruchungen, da wegen des noch warmen Heizkessels der Taupunkt nicht durchfahren wird.

## Patentanspruch

Betriebsverfahren für eine bivalente Heizungsanlage mit einer Wärmepumpe, die bevorzugt zur Deckung des Heizenergiebedarfs herangezogen werden soll und einem Heizkessel, der eingeschaltet wird, wenn die aktuelle Außentemperatur $T_A$ eine Bivalenztemperatur $T_B$ unterschreitet, dadurch gekennzeichnet, daß der Heizkessel wieder ausgeschaltet wird, wenn bei einer im 24-Stunden-Rhythmus nach dem Einschaltzeitpunkt ($t_{ein}$) erfolgenden Überprüfung die aktuelle und die über die jeweils letzte 24-Stunden-Periode gemittelte Außentemperatur ($T_A$, $T_{AM}^*$) die Bivalenztemperatur ($T_B$) übersteigen.

## Claim

A method of operating a bivalent heating system having a heat pump which is preferably to be used for covering the heat energy consumption, and a heating boiler which is switched on when the actual outside temperature $T_A$ falls below a bivalence temperature $T_B$, characterised in that the heating boiler is switched off when during checking in a 24-hour rhythm after the switch-on time ($t_{ein}$), the actual outside temperature and the outside temperature averaged over the respective last 24-hour period ($T_A$, $T_{AM}^*$) exceed the bivalence temperature ($T_B$).

## Revendication

Procédé pour faire fonctionner une installation de chauffage bivalente, comprenant une pompe à chaleur, qui doit être utilisée de préférence pour couvrir les besoins en énergie calorifique, et une chaudière de chauffage, qui est branchée quand la température ($T_A$), régnant à l'extérieur à l'instant considéré est inférieure à une température de bivalence ($T_B$), caractérisé en ce qu'il consiste à débrancher à nouveau la chaudière de chauffage si, lors d'un contrôle s'effectuant à un rythme de 24 heures après l'instant de branchement ($t_{ein}$), la température régnant à l'extérieur à l'instant considéré ($T_A$) et la moyenne des températures régnant à l'extérieur, calculée sur la dernière période de 24 heures ($T_{AM}^*$) dépassent la température de bivalence ($T_B$).

FIG 1

FIG 2

1